# EUROPEAN PATENT SPECIFICATION

(11) **EP 2 422 477 B1**
(45) Date of publication and mention of the grant of the patent: **26.12.2012**
(21) Application number: 09786371.6
(22) Date of filing: 24.04.2009
(51) Int. Cl.: H04L 1/18

(54) **METHOD AND APPARATUS FOR DELTA DATA STORAGE**
VERFAHREN UND VORRICHTUNG ZUR DELTA-DATENSPEICHERUNG
PROCÉDÉ ET APPAREIL POUR MÉMORISATION DE DONNÉES DELTA

(43) Date of publication of application: 29.02.2012
(73) Proprietor: Nokia Corporation, 02150 Espoo (FI)
(72) Inventor: ANDERSEN, Jakob, Bækgaard, DK-2820 Gentofte (DK); BJØRN-JØRGENSEN, Peter, DK-4000 Roskilde (DK)
(74) Representative: Aarnio, Ari Antero
(86) International application number: PCT/IB2009/051693
(87) International publication number: WO 2010/122374

(56) References cited:
- US-A1- 2003 040 284
- US-A1- 2009 100 310

## Description

### TECHNICAL FIELD

Embodiments of the present invention relate generally to mechanisms that support network communications, and, more particularly, relate to a method and apparatus for delta data storage.

### BACKGROUND

Radio communication systems, such as a wireless data networks (e.g., Third Generation Partnership Project (3GPP) Long Term Evolution (LTE) systems, spread spectrum systems (such as Code Division Multiple Access (CDMA) networks), Time Division Multiple Access (TDMA) networks, etc.), provide users with the convenience of mobility along with a rich set of services and features. This convenience has spawned significant adoption by an ever growing number of consumers as an accepted mode of communication for business and personal uses. As a result of the widespread use of radio communications networks, users increasingly demand new and more powerful functionality via the networks. In this regard, while communications devices continue to evolve, limitations of communications devices have negative effects on the functionality of the devices. The limited computing ability of network devices, the limited power (e.g., battery power) available to network devices, and/or the time needed by devices to compute and store data for applications, often generate network bottlenecks and/or functionality limitations for communications devices. Document US 2003/0040284 discloses a method for combining retransmitted received data with the received data stored in a buffer.

### BRIEF SUMMARY

Methods and apparatus are described that implement delta data storage, for example, within a Hybrid Automatic Repeat Request (HARQ) buffer. According to an example embodiment of the present invention, a redundancy version may be received for data packet error correction. The redundancy version may comprise a number of bits. The values of the bits within the redundancy version may be soft combined with bits stored in a HARQ buffer. The bits generated via the soft combining process may be compared with the corresponding existing bit values in the HARQ buffer. If differences between soft combined bits and respective buffered bits are identified, the soft combined bits may be stored in the HARQ buffer to thereby replace the buffered bits. If the differences between the soft combined bits and the respective buffered bits are not identified (e.g., the soft combined bits and the respective buffered bits are equal or identical), the soft combined bits may be discarded, and not stored in the HARQ buffer.

Various example embodiments of the present invention are described herein. One example embodiment is a method for delta data storage. The example method includes receiving a redundancy version including a plurality of redundancy version bits, and soft combining the redundancy version bits with corresponding buffered bits to generate corresponding soft combined bits. The example method further includes comparing the soft combined bits with the corresponding buffered bits to identify changed bits and unchanged bits and storing the changed bits in a buffer to thereby replace the buffered bits that correspond to the changed bits.

Another example embodiment is an example apparatus for delta data storage. The example apparatus comprises a processor and a memory storing instructions that, in response to execution of the instructions by the processor, cause the example apparatus to perform various functions. The example apparatus is caused to receive a redundancy version including a plurality of redundancy version bits, and soft combine the redundancy version bits with corresponding buffered bits to generate corresponding soft combined bits. The example apparatus is further caused to compare the soft combined bits with the corresponding buffered bits to identify changed bits and unchanged bits and store the changed bits in a buffer to thereby replace the buffered bits that correspond to the changed bits.

Another example embodiment is an example computer program product for delta data storage. The example computer program product comprises at least one computer-readable storage medium having executable computer-readable program code instructions stored therein. The computer-readable program code instructions of the example computer program product are configured to receive a redundancy version including a plurality of redundancy version bits, and soft combine the redundancy version bits with corresponding buffered bits to generate corresponding soft combined bits. The computer-readable program code instructions of the example computer program product are further configured to compare the soft combined bits with the corresponding buffered bits to identify changed bits and unchanged bits and cause the changed bits to be stored in a buffer to thereby replace the buffered bits that correspond to the changed bits.

According to another example embodiment, an example apparatus for delta data storage is provided. The example apparatus includes means for receiving a redundancy version including a plurality of redundancy version bits, and means for soft combining the redundancy version bits with corresponding buffered bits to generate corresponding soft combined bits. The example apparatus further includes means for comparing the soft combined bits with the corresponding buffered bits to identify changed bits and unchanged bits and means for storing the changed bits in a buffer to thereby replace the buffered bits that correspond to the changed bits.

### BRIEF DESCRIPTION OF THE DRAWING(S)

Having thus described the invention in general terms, reference will now be made to the accompanying drawings, which are not necessarily drawn to scale, and wherein:
FIG. 1 illustrates example bit definitions including bit definitions for redundancy versions according to various example embodiments of the present invention;
FIG. 2 illustrates an example block diagram and process flow for delta data storage according to various example embodiments of the present invention;
FIG. 3 illustrates a block diagram of an example apparatus for delta data storage according to various example embodiments of the present invention; and
FIG. 4 illustrates an example method for implementing delta data storage according to various example embodiments of the present invention.

### DETAILED DESCRIPTION

Example embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout. The terms "data," "content," "information," and similar terms may be used interchangeably, according to some example embodiments of the present invention, to refer to data capable of being transmitted, received, operated on, and/or stored.

Many wireless communications systems, including Third Generation Partnership Project (3GPP) Long Term Evolution (LTE) systems, utilize an error control scheme referred to as Hybrid Automatic Repeat Request (HARQ). The HARQ scheme combines Automatic Repeat Request (ARQ) protocols with forward-error-correction (FEC) schemes, to provide an error-control technique for wireless links. It is noted that different wireless technologies may utilize different HARQ schemes. HARQ may be used to increase the link and spectral efficiency of LTE, as HARQ allows a system to operate at a relative high block error rate of the first transmissions. The HARQ scheme may be made part of the medium access control (MAC) layer and be enabled on a terminal-by-terminal basis.

In many HARQ schemes, a receiver of an FEC encoded data packet may attempt to decode the packet. Decoding of the packet may fail based on a Cyclic Redundancy Check (CRC) of the decoded packet. In response to a decoding failure, a request for a retransmission of the packet may be implemented by the receiver. In this regard, the entire original packet may be retransmitted, a portion of the packet may be transmitted, or information associated with the packet may be transmitted to the receiver for error correction purposes. Regardless of the content type of information transmitted, the retransmission may be referred to as a redundancy version of the packet. Depending on the type of redundancy version received by the receiver, the receiver may react accordingly to perform error correction using the redundancy version.

In a Type I HARQ scheme, in response to a failed decoding of the packet, the decoded information is discarded and a new packet is requested. The redundancy versions in a Type I scheme may be identical retransmissions of the original packet. As such, all redundancy versions are decoded separately and independent of packets that were previously received.

In a Type II HARQ scheme, in response to a failure to decode a packet, a retransmission may also be requested. However, in a Type II scheme the information associated with the original data packet may be stored as soft data, also referred to as soft-bits or soft symbols. The soft data may be stored in a soft buffer, also referred to as a HARQ buffer, which may reside within a memory device of the receiver. Upon receiving a redundancy version, a combination of the buffered soft data and the redundancy version data is generated via a soft combining process. Since the redundancy version may include the entire original packet, a portion of the packet, or information associated with the packet, soft combining the redundancy version data with the buffered soft data may be performed in a number of ways. For example, a Maximum Ratio Combining (MRC) may be performed, or a Log-Likelihood-Ratio (LLR) combining may be performed. The results of soft combining the data may be in the form of probabilities that respective bits of the decoded packets are either ones or zeros. If after receiving the redundancy version, the packet can still not be accurately decoded, additional redundancy versions may be requested. The combination of the redundancy version data with the buffered soft data can therefore result in correction of errors and an increased assurance that the decoded data is accurate.

Type II HARQ schemes may also dictate the quantity of data to be received in a redundancy version based on the results of a soft combine process. For example, if it is determined that particular bits within the decoded packet remain questionable, a redundancy version targeting the questionable bits may be requested. A redundancy version, in this regard, may not be separately decodable, but rather relies upon the soft data already received in order for the redundancy version to be of value. In this way, a Type III HARQ scheme differs from a Type II scheme. In a Type III HARQ scheme each redundancy version is separately decodable. However, Type III HARQ schemes also use soft combining and a HARQ buffer.

As mentioned above, combining the buffered data with the redundancy version data to ultimately update the information in the HARQ buffer may be referred to as soft combining. In some instances, soft combining the data may generate a number of bits associated with each bit in the decoded packet. The number of bits may be a probability value indicating the certainty that a bit is either a one or a zero. For example, a five bit probability value may be used such that a separate five bit value is associated with each bit of the underlying decoded packet. In this regard, representative probability values may fashioned as indicated in Table 1.

**TABLE 1**

| **Relative Probability** | **Binary Value** | **Decimal Value** |
|---|---|---|
| Strong "0" | 01111 | +15 |
| Weak "0" | 00001 | +1 |
| Neutral | 00000 | 0 |
| Weak "1" | 11111 | -1 |
| Strong "1" | 10001 | -15 |

Referring to Table 1, a "Strong '0'" associated with a bit indicates that the bit value is more likely to be a zero than if a "Weak '0'" were to be associated with the bit. Based on the probability values, an indication of how accurately the packet has been decoded may be ascertained. A "Neutral" value may be an indication that the associated bit is relatively uncertain based on the data received.

Considering the five bit probability scheme described with respect to Table 1, it can be seen that a HARQ buffer may have relatively large size requirements. As a result, implementation of the HARQ buffer as an internal HARQ buffer, for example, in memory on a common chip or integrated circuit as a processor, may be expensive. On the other hand, an external implementation of the HARQ buffer, for example a separate chip or integrated circuit separate from a processor, may result in increased power utilization and delays affecting bandwidth while writing and reading to and from the buffer. In some instances, Limited Buffer Rate Matching (LBRM) may be utilized in LTE to reduce the memory size requirements of the HARQ buffer.

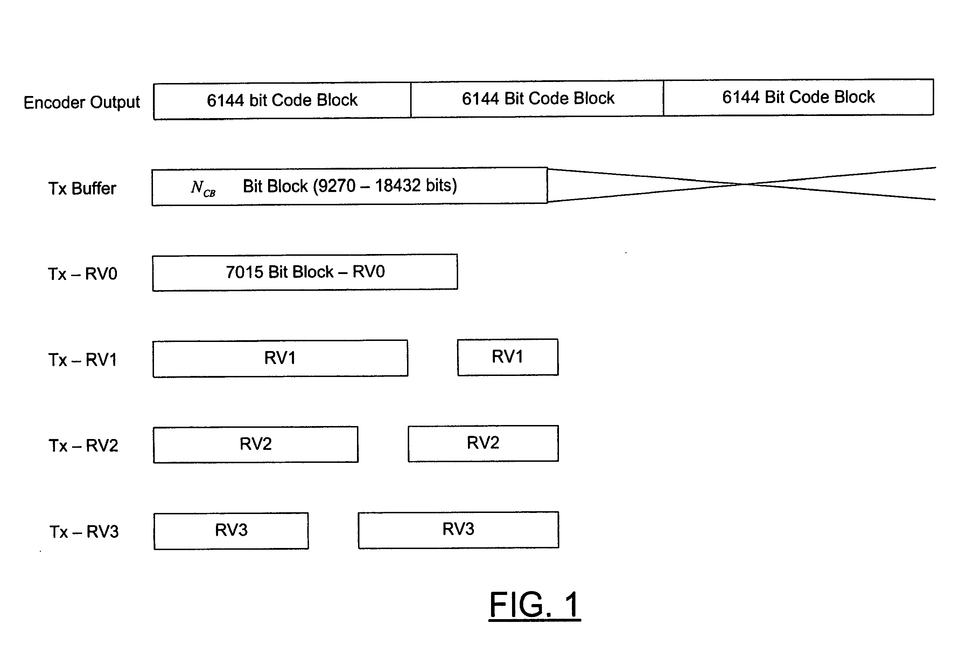

FIG. 1 depicts an example size requirement for a HARQ buffer with respect to transmitted data. In this regard, the encoder output at the transmitter may be, for example, three 6144 bit code blocks. The first block of the encoder output may be systematic bits or raw data bits, and the second block of the encoder output may be a first set of parity bits. The first set of parity bits may be redundant with respect to the raw data bits. The third block of the encoder output may be a second set of parity bits, which may again be redundant to the raw data bits. As such, the example encoder implemented with respect to FIG. 1 may be a one-third encoder, since the encoder output include raw data in one-third of the bits.

The transmission buffer (e.g., Tx buffer) may include some or all of the bits of the encoded code blocks. According to various example embodiments, the transmission buffer may include 9270 to 18432 bits, but in some instances, the transmission buffer may be defined to include as few as 6144 bits. The encoder output bits that are not included in the Tx Buffer may be ignored for rate matching purposes. The contents of the transmission buffer may be provided to a receiver. Subsequently, the transmitter may provide additional redundancy versions (e.g., RV0, RV1, RV2, and RV3) to the receiver. The size of the redundancy versions may be defined by the radio channel capacity, which is the case for Evolved Universal Terrestrial Radio Access Network (E-UTRAN) systems. The redundancy versions may be provided in a manner that the receiver receives all of the bits of the encoder output upon receipt of the second redundancy version, in this case RV1, which may occur at the highest data rates in category 3, 4, and 5 in E-UTRAN systems.

In high data rate systems where a HARQ technique is used, the size of the HARQ buffer may be reduced depending on the maximum achievable data rates and cost associated with building a HARQ buffer. A reduction in the size of the HARQ buffer may result in HARQ RVs not being stored, or not being completely stored, in the HARQ buffer at the original coding rate. Accordingly, overlap in the RVs may readily occur at higher data rates, where the size of the HARQ buffer becomes a limiting factor. In this regard, Table 1 provides UE categories, associated data rates, and HARQ buffer sizes in accordance with 3GPP 36.304.

**TABLE 2**

| **UE Category** | **Max Data Rate per Subframe** | **HARQ Buffer Size** |
|---|---|---|
| Category 1 | 10296 | 250368 |
| Category 2 | 51024 | 1237248 |
| Category 3 | 102048 | 1237248 |
| Category 4 | 150752 | 1827072 |
| Category 5 | 302752 | 3667200 |

In light of the foregoing, example embodiments of the present invention reduce the power consumption and lag times associated with updating the HARQ buffer with the results of a soft combination, particularly with respect to high data rate communications. To do so, example embodiments of the present invention reduce the number of write operations perfomed with respect to a HARQ buffer.

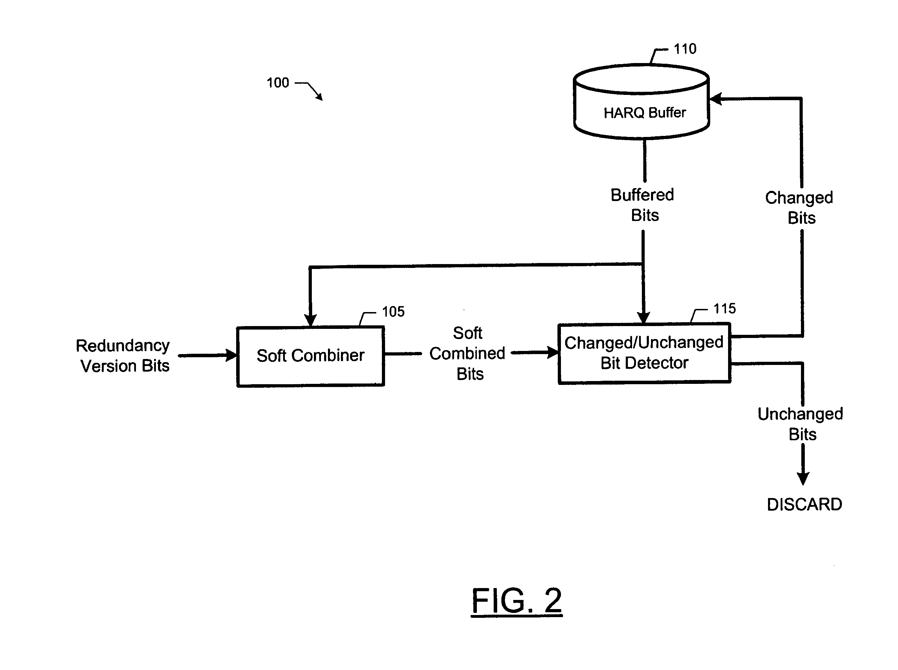

In this regard, FIG. 2 depicts a process flow and a high level block diagram of an example implementation of the present invention. The example system 100 may be included in a communications device that receives data packets and implements a HARQ scheme utilizing a HARQ buffer. The example system 100 includes a soft combiner 105, a HARQ buffer 110, and a changed/unchanged bit detector 115. The soft combiner 105 and the changed/unchanged bit detector 115 may be representative of functional aspects of example embodiments of the present invention implemented by a processor, such as the processor 205 described below. The HARQ buffer 105 may be implemented in an internal or external memory device, such as the memory device 210 described below.

According to an example embodiment, the system 100, and in particular the soft combiner 105, may receive a redundancy version including redundancy version bits. In this regard, the soft combiner 105 may include a soft bit detector for detecting soft bits within a received packet, and may also be configured to perform rate matching. Further, the soft combiner 105 of the example system 100 may be configured to soft combine the redundancy version bits that overlap with corresponding buffered bits retrieved from the HARQ buffer 110 to generate soft combined bits. In one example embodiment, the soft combiner 105 may also be configured to provide the soft combined bits, possibly together with additional inserted neutral value bits, as a complete code block (e.g., 3 x 6144 bits) to a turbo decoding module.

The changed/unchanged bit detector 115 may compare the soft combined bits with the buffered bits to identify bits that have changed via the soft combination or have remained unchanged via the soft combination. In one example embodiment, a First-In-First-Out (FIFO) delay mechanism may be implemented to allow for proper timing of the comparison of the soft combined bits from the soft combiner 105 with corresponding buffered bits received from the HARQ buffer 110. Via the comparison, the changed/unchanged bit detector 115 may be configured to identify a group of changed bits, and a group of unchanged bits. The changed/unchanged bit detector 115 may store the changed bits in the HARQ buffer to update the appropriate bit values based on the recently received redundancy version. The changed/unchanged bit detector 115 may also discard the unchanged bits. In this regard, discarding the unchanged bits may include taking no further action with respect to the unchanged bits, such as further storage of the unchanged bits in the HARQ buffer 110. According to one example embodiment, discarding the unchanged bits may include taking no action with respect to the unchanged bits other than to allow the unchanged bits to be overwritten in a temporary buffer used in future comparisons when decoding of a packet fails. In this regard, the changed/unchanged bit detector 115 may implement a temporary HARQ FIFO buffer to facilitate comparisons between the buffered bits and the soft combined bits. Considerations for implementing the temporary FIFO buffer may include cost, available silicon area on a chip, and/or the power utilized to write back to the HARQ buffer, particularly when the HARQ buffer is located relatively far away.

In one example embodiment, the changed/unchanged bit detector 115 may identify the unchanged bits included in the soft combined bits and modify the values of the corresponding unchanged bits to be a neutral value (e.g., "00000" from Table 1). The changed/unchanged bit detector 115 may subsequently identify the soft combined bits having a neutral value as the bits to be discarded. In this regard, the neutral value may be treated as a mark for use in identifying bits that may be discarded. According to various example embodiments, various other marks may be used, to identify bits that may be discarded such as, for example an associated bit flag or a bit masking technique.

According to various example embodiments, a more detailed description of the operation of an example soft combiner, and example changed/unchanged bit detector, and example HARQ buffer may be as follows to build a complete code block representative of the encoded output at the transmitter. The soft combiner may receive a first redundancy version (RV0) and insert neutral values for missing bits (e.g., missing parity bits) of the complete code block that were not received in RV0. The resultant first version of the complete code block may be stored in the HARQ buffer, and possibly providing to a turbo decoding module for decoding.

The soft combiner may then receive a second redundancy version (RV1). The soft combiner may fetch the code block stored in the HARQ buffer and soft combine the overlapping bits included in RV1. The changed/unchanged bit detector may identify the changed bits and write the changed bits back to the HARQ buffer. The resultant code block may also be provided to the turbo decoding module for decoding.

With each additional receipt of a redundancy version by the soft combiner, the soft combiner may fetch the stored code block (soft combined version) from the HARQ buffer and soft combine the overlapping bits. The changed/unchanged bit detector may identify the changed bits and write the changed bits back to the HARQ buffer. The resultant code block may also be provided to the turbo decoding module for decoding.

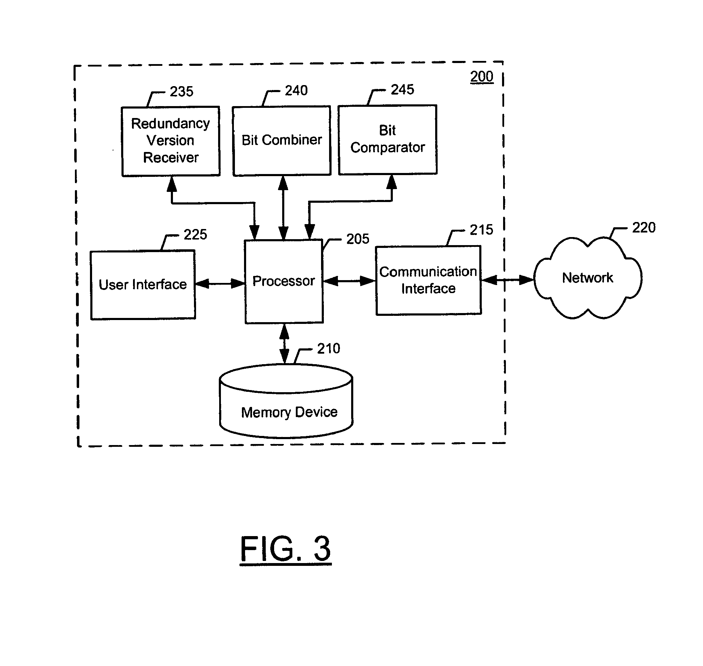

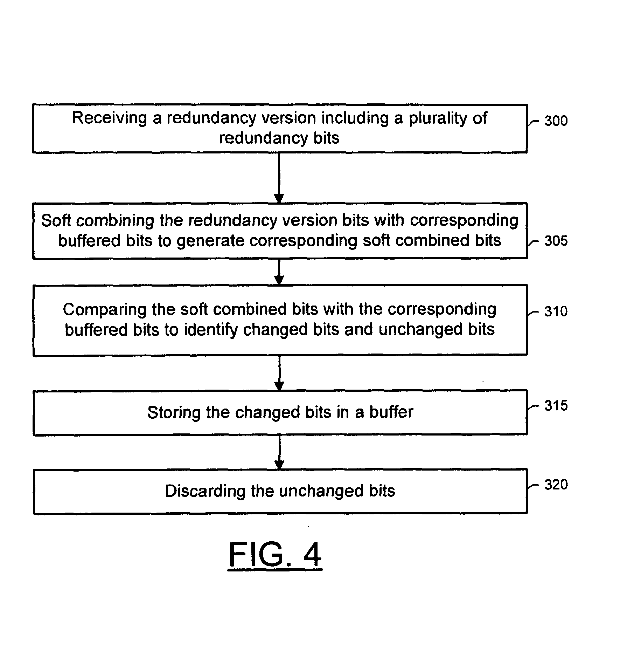

The description provided above and generally herein illustrates example methods, example apparatuses, and example computer program products for implementing delta data storage. FIG. 3 illustrates another example embodiment of the present invention in the form of an example apparatus 200 that is configured to perform various aspects of the present invention as described herein. According to some example embodiments, the example apparatus 200 may include the soft combiner 105, the HARQ buffer 110, and/or the changed/unchanged bit detector 115 of FIG. 1 and be configured to perform the operations of the soft combiner 105, the HARQ buffer 110, and/or the changed/unchanged bit detector 115 as described with respect to FIG. 1. The example apparatus 200 may also be configured to perform example methods of the present invention, such as those described with respect to FIG. 4.

In some example embodiments, the apparatus 200 is embodied as, or included as a component of, a communications device with wired or wireless communications capabilities. Some examples of the apparatus 200, or devices that may include the apparatus 200, include a computer, a server, a network entity, a mobile terminal such as a mobile telephone, a portable digital assistant (PDA), a pager, a mobile television, a gaming device, a mobile computer, a laptop computer, a camera, a video recorder, an audio/video player, a radio, and/or a global positioning system (GPS) device, any combination of the aforementioned, or the like.

The example apparatus 200 includes or is otherwise in communication with a processor 205, a memory device 210, a communications interface 215, a redundancy version receiver 235, a bit combiner 240, and/or a bit comparator 245. In some embodiments, the example apparatus 200 may optionally include a user interface 225. The processor 205 may be embodied as various means implementing various functionality of example embodiments of the present invention including, for example, a microprocessor, a coprocessor, a controller, a special-purpose integrated circuit such as, for example, an ASIC (application specific integrated circuit), an FPGA (field programmable gate array), or a hardware accelerator, processing circuitry or the like. According to one example embodiment, processor 205 may be representative of a plurality of processors operating in concert. The processor 205 may, but need not, include one or more accompanying digital signal processors. In some example embodiments, the processor 205 is configured to execute instructions stored in the memory device 210 or instructions otherwise accessible to the processor 205. As such, whether configured as hardware or via instructions stored on a computer-readable storage medium, or by a combination thereof, the processor 205 may be an entity capable of performing operations according to embodiments of the present invention while configured accordingly. Thus, in example embodiments where the processor 205 is embodied as an ASIC, FPGA, or the like, the processor 205 is specifically configured hardware for conducting the operations described herein. Alternatively, in example embodiments where the processor 205 is embodied as an executor of instructions stored on a computer-readable storage medium, the instructions specifically configure the processor 205 to perform the algorithms and operations described herein. In some example embodiments, the processor 205 is a processor of a specific device (e.g., a mobile terminal) configured for employing example embodiments of the present invention by further configuration of the processor 205 via executed instructions for performing the algorithms and operations described herein.

The memory device 210 may be one or more computer-readable storage media that may include volatile and/or non-volatile memory. In some example embodiments, the memory device 210 includes Random Access Memory (RAM) including dynamic and/or static RAM, on-chip or off-chip cache memory, and/or the like. Further, memory device 210 may include non-volatile memory, which may be embedded and/or removable, and may include, for example, read-only memory, flash memory, magnetic storage devices (e.g., hard disks, floppy disk drives, magnetic tape, etc.), optical disc drives and/or media, non-volatile random access memory (NVRAM), and/or the like. Memory device 210 may include a cache area for temporary storage of data. In this regard, some or all of memory device 210 may be included within the processor 205.

Further, the memory device 210 may be configured to store information, data, applications, computer-readable program code instructions, or the like for enabling the processor 205 and the example apparatus 200 to carry out various functions in accordance with example embodiments of the present invention described herein. For example, the memory device 210 could be configured to buffer input data for processing by the processor 205. Additionally, or alternatively, the memory device 210 may be configured to store instructions for execution by the processor 205.

The communication interface 215 may be any device or means embodied in either hardware, a computer program product, or a combination of hardware and a computer program product that is configured to receive and/or transmit data from/to a network and/or any other device or module in communication with the example apparatus 200. Processor 205 may also be configured to facilitate communications via the communications interface by, for example, controlling hardware included within the communications interface 215. In this regard, the communication interface 215 may include, for example, one or more antennas, a transmitter, a receiver, a transceiver and/or supporting hardware, including a processor for enabling communications with network 220. Via the communication interface 215 and the network 220, the example apparatus 200 may communicate with various other network entities in a peer-to-peer fashion or via indirect communications via a base station, access point, server, gateway, router, or the like.

The communications interface 215 may be configured to provide for communications in accordance with any wired or wireless communication standard. The communications interface 215 may be configured to support communications in multiple antenna environments, such as multiple input multiple output (MIMO) environments. Further, the communications interface 215 may be configured to support orthogonal frequency division multiplexed (OFDM) signaling. In some example embodiments, the communications interface 215 may be configured to communicate in accordance with various techniques, such as, second-generation (2G) wireless communication protocols IS-136 (time division multiple access (TDMA)), GSM (global system for mobile communication), IS-95 (code division multiple access (CDMA)), third-generation (3G) wireless communication protocols, such as Universal Mobile Telecommunications System (UMTS), CDMA2000, wideband CDMA (WCDMA) and time division-synchronous CDMA (TD-SCDMA), 3.9 generation (3.9G) wireless communication protocols, such as Evolved Universal Terrestrial Radio Access Network (E-UTRAN), with fourth-generation (4G) wireless communication protocols, international mobile telecommunications advanced (IMT-Advanced) protocols, Long Term Evolution (LTE) protocols including LTE-advanced, or the like. Further, communications interface 215 may be configured to provide for communications in accordance with techniques such as, for example, radio frequency (RF), infrared (IrDA) or any of a number of different wireless networking techniques, including WLAN techniques such as IEEE 802.11 (e.g., 802.11a, 802.11b, 802.11g, 802.11n, etc.), wireless local area network (WLAN) protocols, world interoperability for microwave access (WiMAX) techniques such as IEEE 802.16, and/or wireless Personal Area Network (WPAN) techniques such as IEEE 802.15, BlueTooth (BT), low power versions of BT, ultra wideband (UWB), Wibree, Zigbee and/or the like. The communications interface 215 may also be configured to support communications at the network layer, possibly via Internet Protocol (IP).

The user interface 225 may be in communication with the processor 205 to receive user input via the user interface 225 and/or to present output to a user as, for example, audible, visual, mechanical or other output indications. The user interface 225 may include, for example, a keyboard, a mouse, a joystick, a display (e.g., a touch screen display), a microphone, a speaker, or other input/output mechanisms.

The redundancy version receiver 235, the bit combiner 240, and the bit comparator 245 of example apparatus 200 may be configured to cause the apparatus 200 to perform various functionalities. The redundancy version receiver 235, the bit combiner 240, and the bit comparator 245 of example apparatus 200 may be any means or device embodied, partially or wholly, in hardware, a computer program product, or a combination of hardware and a computer program product, such as processor 205 implementing stored instructions to configure the example apparatus 200, or a hardware configured processor 205, that is configured to carry out the functions of the redundancy version receiver 235, the bit combiner 240, and/or the bit comparator 245 as described herein. In an example embodiment, the processor 205 includes, or controls, the redundancy version receiver 235, the bit combiner 240, and/or the bit comparator 245. The redundancy version receiver 235, the bit combiner 240, and/or the bit comparator 245 may be, partially or wholly, embodied as processors similar to, but separate from processor 205. In this regard, the redundancy version receiver 235, the bit combiner 240, and/or the bit comparator 245 may be in communication with the processor 205. In various example embodiments, the redundancy version receiver 235, the bit combiner 240, and/or the bit comparator 245 may, partially or wholly, reside on differing apparatuses such that some or all of the functionality of the redundancy version receiver 235, the bit combiner 240, and/or the bit comparator 245 may be performed by a first apparatus, and the remainder of the functionality of the redundancy version receiver 235, the bit combiner 240, and/or the bit comparator 245 may be performed by one or more other apparatuses.

The redundancy version receiver 235 may be configured to receive a redundancy version. The redundancy version may include a plurality of redundancy version bits. According to some example embodiments, the redundancy version receiver 235 may be configured to receive the redundancy version in response to an implementation of a HARQ scheme.

The bit combiner 240 may be configured to soft combine the redundancy version bits with corresponding buffered bits to generate corresponding soft combined bits. The buffered bits may be retrieved from a HARQ buffer. In one example embodiment, the HARQ buffer may be included in the memory device 210. The HARQ buffer may be embodied as internal memory, such as cache memory of processor 205, or external memory such as non-volatile memory included on a separate memory chip. According to one example embodiment, soft combining the redundancy version bits with the buffered bits generates corresponding soft combined bits representative of probability values. The probability values may be indicative of whether a respective coded bit is a one or a zero.

The bit comparator 245 may be configured to compare the soft combined bits with the corresponding buffered bits to identify changed bits and unchanged bits. In response to identification of the changed bits, the bit comparator 245 may be configured to store the changed bits in a buffer. In this regard, the changed bits may be stored to thereby replace the buffered bits that correspond to the changed bits in the buffer. As described above, the buffer may be a HARQ buffer included in internal memory or external memory. In response to identification of the unchanged bits, the bit comparator 245 may be configured to discard the unchanged bits. According to various example embodiments, the unchanged bits are not stored in a buffer, (e.g., HARQ buffer). In this regard, according to one example embodiment, no action is taken with respect to the identified unchanged bits, other than to allow the unchanged bits to be overwritten in the memory in which the bits reside. According to some example embodiments, the bit comparator 245 may, in response to identifying an unchanged bit, set the value of the unchanged bit to a neutral value. Subsequently, the value of the bits may be checked and bits having a neutral value may be discarded as unchanged bits.

FIGs. 1 and 4 illustrate flowcharts of example systems, methods, and/or computer program products according to example embodiments of the invention. It will be understood that each block or operation of the flowcharts, and/or combinations of blocks or operations in the flowcharts, can be implemented by various means. Means for implementing the blocks or operations of the flowcharts, combinations of the blocks or operations in the flowchart, or other functionality of example embodiments of the present invention described herein may include hardware, and/or a computer program product including a computer-readable storage medium having one or more computer program code instructions, program instructions, or executable computer-readable program code instructions stored therein. In this regard, program code instructions may be stored on a memory device, such as memory device 210, of an example apparatus, such as example apparatus 200, and executed by a processor, such as the processor 205. As will be appreciated, any such program code instructions may be loaded onto a computer or other programmable apparatus (e.g., processor 205, memory device 210) from a computer-readable storage medium to produce a particular machine, such that the particular machine becomes a means for implementing the functions specified in the flowcharts' block(s) or operation(s). These program code instructions may also be stored in a computer-readable storage medium that can direct a computer, a processor, or other programmable apparatus to function in a particular manner to thereby generate a particular machine or particular article of manufacture. The instructions stored in the computer-readable storage medium may produce an article of manufacture, where the article of manufacture becomes a means for implementing the functions specified in the flowcharts' block(s) or operation(s). The program code instructions may be retrieved from a computer-readable storage medium and loaded into a computer, processor, or other programmable apparatus to configure the computer, processor, or other programmable apparatus to execute operations to be performed on or by the computer, processor, or other programmable apparatus. Retrieval, loading, and execution of the program code instructions may be performed sequentially such that one instruction is retrieved, loaded, and executed at a time. In some example embodiments, retrieval, loading and/or execution may be performed in parallel such that multiple instructions are retrieved, loaded, and/or executed together. Execution of the program code instructions may produce a computer-implemented process such that the instructions executed by the computer, processor, or other programmable apparatus provide operations for implementing the functions specified in the flowcharts' block(s) or operation(s).

Accordingly, execution of instructions associated with the blocks or operations of the flowchart by a processor, or storage of instructions associated with the blocks or operations of the flowcharts in a computer-readable storage medium, support combinations of operations for performing the specified functions. It will also be understood that one or more blocks or operations of the flowcharts, and combinations of blocks or operations in the flowcharts, may be implemented by special purpose hardware-based computer systems and/or processors which perform the specified functions, or combinations of special purpose hardware and program code instructions.

FIG. 4 depicts an example method for implementing delta data storage according to various embodiments of the present invention. The example method includes receiving a redundancy version at 300. The redundancy version may include a plurality of redundancy version bits. According to some example embodiments, the redundancy version is received in response to an implementation of a HARQ scheme.

The example method further includes soft combining the redundancy version bits with corresponding buffered bits at 305. The redundancy version bits may be soft combined with the corresponding buffered bits to generate corresponding soft combined bits. According to one example embodiment, the buffered bits may be retrieved from a HARQ buffer. The HARQ buffer may be included in a memory device. The HARQ buffer may be embodied as internal memory, such as cache memory on a processor, or external memory such as non-volatile memory included on a separate memory chip. According to one example embodiment, soft combining the redundancy version bits with the buffered bits generates corresponding soft combined bits representative of probability values. The probability values may be indicative of whether a respective coded bit is a one or a zero.

The example method may also include comparing the soft combined bits with the corresponding buffered bits to identify changed bits and unchanged bits at 310. In response to identification of the changed bits, the example method may include storing the changed bits in a buffer at 315. In this regard, the changed bits may be stored to thereby replace the buffered bits that correspond to the changed bits in the buffer. As described above, the buffer may be a HARQ buffer included in internal memory or external memory. In response to identification of the changed bits, the example method may include discarding the unchanged bits at 320. In this regard, according to one example embodiment, discarding the unchanged bits may include taking no further action with respect to the identified unchanged bits, other than to allow the unchanged bits to be overwritten in the memory in which the bits reside. According to various example embodiments, the unchanged bits are not stored in a buffer, (e.g., HARQ buffer). According to some example embodiments, in response to identifying an unchanged bit, the example method may include setting the value of the unchanged bits to a neutral value. Subsequently, the value of the bits may be checked and bits that have a neutral value may be discarded as unchanged bits.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions other than those explicitly described above are also contemplated as may be set forth in some of the appended claims. Although specific terms are employed herein, they are used in a generic and descriptive sense only and not for purposes of limitation.

## Claims

1. A method comprising:
receiving (300) a redundancy version including a plurality of redundancy version bits;
soft combining (305) the redundancy version bits with corresponding buffered bits to generate corresponding soft combined bits; **characterized by**
comparing (310) the soft combined bits with the corresponding buffered bits to identify changed bits and unchanged bits; and
storing (315) the changed bits in a buffer to thereby replace the buffered bits that correspond to the changed bits.

2. The method of claim 1, wherein receiving the redundancy version includes receiving the redundancy version in response to an implementation of a hybrid automatic repeat request, HARQ.

3. The method of claim 1, wherein comparing the soft combined bits with the corresponding buffered bits to identify changed bits and unchanged bits includes setting a value of the unchanged bits to a neutral value and discarding (320) the unchanged bits having the neutral value.

4. The method of claim 1, wherein receiving the redundancy version includes receiving the redundancy version in response to an implementation of a hybrid automatic repeat request, HARQ; and wherein storing the changed bits includes storing the changed bits in an external HARQ buffer.

5. The method of claim 1, wherein receiving the redundancy version includes receiving the redundancy version in response to an implementation of a hybrid automatic repeat request, HARQ; and wherein storing the changed bits includes storing the changed bits in an internal HARQ buffer.

6. The method of claim 1, wherein soft combining the redundancy version bits with corresponding buffered bits to generate the corresponding soft combined bits includes soft combining to generate the corresponding soft combined bits, the soft combined bits being probability values indicative of whether a respective coded bit is a one or a zero.

7. An apparatus (200) comprising:
at least one processor (205),
at least one memory including computer program code,
the at least one memory and the computer program code configured to, with the at least one processor, cause the apparatus to at least:
receive (300) a redundancy version including a plurality of redundancy version bits;
soft combine (305) the redundancy version bits with corresponding buffered bits to generate corresponding soft combined bits;
compare (310) the soft combined bits with the corresponding buffered bits to identify changed bits and unchanged bits; and
store (315) the changed bits in a buffer to thereby replace the buffered bits that correspond to the changed bits.

8. The apparatus of claim 7, wherein the apparatus caused to receive the redundancy version includes being caused to receive the redundancy version in response to an implementation of a hybrid automatic repeat request, HARQ.

9. The apparatus of claim 7, wherein the apparatus caused to compare the soft combined bits with the corresponding buffered bits to identify changed bits and unchanged bits includes being caused to set a value of the unchanged bits to a neutral value and discard (320) the unchanged bits having the neutral value.

10. The apparatus of claim 7, wherein the apparatus caused to receive the redundancy version includes being caused to receive the redundancy version in response to an implementation of a hybrid automatic repeat request, HARQ; and wherein the apparatus caused to store the changed bits includes being caused to store the changed bits in an external HARQ buffer.

11. The apparatus of claim 7, wherein the apparatus caused to receive the redundancy version includes being caused to receive the redundancy version in response to an implementation of a hybrid automatic repeat request, HARQ; and wherein the apparatus caused to store the changed bits includes being caused to store the changed bits in an internal HARQ buffer.

12. The apparatus of claim 7, wherein the apparatus caused to soft combine the redundancy version bits with corresponding buffered bits to generate the corresponding soft combined bits includes being caused to soft combine to generate the corresponding soft combined bits, the soft combined bits being probability values indicative of whether a respective coded bit is a one or a zero.

13. A computer program configured to cause a method according to any of claims 1-6 to be performed.

## Patentansprüche

1. Verfahren, das Folgendes umfasst:
Empfangen (300) einer Redundanzversion, die mehrere Redundanzversion-Bits beinhaltet;
Soft-Kombinieren (305) der Redundanzversion-Bits mit entsprechenden zwischengespeicherten Bits, um entsprechende soft-kombinierte Bits zu erzeugen; **gekennzeichnet durch**
Vergleichen (310) der soft-kombinierten Bits mit den entsprechenden zwischengespeicherten Bits, um veränderte und unveränderte Bits zu identifizieren; und
Speichern (315) der veränderten Bits in einem Zwischenspeicher, um **dadurch** die zwischengespeicherten Bits zu ersetzen, die den veränderten Bits entsprechen.

2. Verfahren nach Anspruch 1, wobei das Empfangen der Redundanzversion das Empfangen der Redundanzversion als Reaktion auf eine Implementierung einer automatischen Hybridwiederholungsanforderung, HARQ (hybrid automatic repeat request), beinhaltet.

3. Verfahren nach Anspruch 1, wobei das Vergleichen der soft-kombinierten Bits mit den entsprechenden zwischengespeicherten Bits, um veränderte Bits und unveränderte Bits zu identifizieren, das Einstellen eines Werts der unveränderten Bits auf einen neutralen Wert und das Verwerfen (320) der unveränderten Bits mit dem neutralen Wert beinhaltet.

4. Verfahren nach Anspruch 1, wobei das Empfangen der Redundanzversion das Empfangen der Redundanzversion als Reaktion auf eine Implementierung einer automatischen Hybridwiederholungsanforderung, HARQ, beinhaltet und wobei das Speichern der veränderten Bits das Speichern der veränderten Bits in einem externen HARQ-Zwischenspeicher beinhaltet.

5. Verfahren nach Anspruch 1, wobei das Empfangen der Redundanzversion das Empfangen der Redundanzversion als Reaktion auf eine Implementierung einer automatischen Hybridwiederholungsanforderung, HARQ, beinhaltet und wobei das Speichern der veränderten Bits das Speichern der veränderten Bits in einem internen HARQ-Zwischenspeicher beinhaltet.

6. Verfahren nach Anspruch 1, wobei das Soft-Kombinieren der Redundanzversion-Bits mit entsprechenden zwischengespeicherten Bits, um die entsprechenden soft-kombinierten Bits zu erzeugen, das Soft-Kombinieren, um die entsprechenden soft-kombinierten Bits zu erzeugen, beinhaltet, wobei die soft-kombinierten Bits Wahrscheinlichkeitswerte sind, die anzeigen, ob ein jeweiliges codiertes Bit eine Eins oder eine Null ist.

7. Vorrichtung (200), die Folgendes umfasst:
mindestens einen Prozessor (205),
mindestens einen Speicher, der Computerprogrammcode beinhaltet,
wobei der mindestens eine Speicher und der Computerprogrammcode dazu konfiguriert sind, mit dem mindestens einen Prozessor zu bewirken, dass die Vorrichtung zu mindestens Folgendem gebracht wird:
Empfangen (300) einer Redundanzversion, die mehrere Redundanzversion-Bits beinhaltet;
Soft-Kombinieren (305) der Redundanzversion-Bits mit entsprechenden zwischengespeicherten Bits, um entsprechende soft-kombinierte Bits zu erzeugen;
Vergleichen (310) der soft-kombinierten Bits mit den entsprechenden zwischengespeicherten Bits, um veränderte und unveränderte Bits zu identifizieren; und
Speichern (315) der veränderten Bits in einem Zwischenspeicher, um dadurch die zwischengespeicherten Bits zu ersetzen, die den veränderten Bits entsprechen.

8. Vorrichtung nach Anspruch 7, wobei die Vorrichtung, die dazu gebracht wird, die Redundanzversion zum empfangen, beinhaltet, dass sie dazu gebracht wird, die Redundanzversion als Reaktion auf eine Implementierung einer automatischen Hybridwiederholungsanforderung, HARQ (hybrid automatic repeat request) zu empfangen.

9. Vorrichtung nach Anspruch 7, wobei die Vorrichtung, die dazu gebracht wird, die soft-kombinierten Bits mit den entsprechenden zwischengespeicherten Bits zu vergleichen, um veränderte Bits und unveränderte Bits zu identifizieren, beinhaltet, dass sie dazu gebracht wird, einen Wert der unveränderten Bits auf einen neutralen Wert einzustellen und die unveränderten Bits mit dem neutralen Wert zu verwerfen (320).

10. Vorrichtung nach Anspruch 7, wobei die Vorrichtung, die dazu gebracht wird, die Redundanzversion zu empfangen, beinhaltet, dass sie dazu gebracht wird, die Redundanzversion als Reaktion auf eine Implementierung einer automatischen Hybridwiederholungsanforderung, HARQ, zu empfangen, und wobei die Vorrichtung, die dazu gebracht wird, die veränderten Bits zu speichern, beinhaltet, dass sie dazu gebracht wird, die veränderten Bits in einem externen HARQ-Zwischenspeicher zu speichern.

11. Vorrichtung nach Anspruch 7, wobei die Vorrichtung, die dazu gebracht wird, die Redundanzversion zu empfangen, beinhaltet, dass sie dazu gebracht wird, die Redundanzversion als Reaktion auf eine Implementierung einer automatischen Hybridwiederholungsanforderung, HARQ, zu empfangen, und wobei die Vorrichtung, die dazu gebracht wird, die veränderten Bits zu speichern, beinhaltet, dass sie dazu gebracht wird, die veränderten Bits in einem internen HARQ-Zwischenspeicher zu speichern.

12. Vorrichtung nach Anspruch 7, wobei die Vorrichtung, die dazu gebracht wird, die Redundanzversion-Bits mit entsprechenden zwischengespeicherten Bits zu soft-kombinieren, um die entsprechenden soft-kombinierten Bits zu erzeugen, beinhaltet, dass sie dazu gebracht wird zu soft-kombinieren um die entsprechenden soft-kombinierten Bits zu erzeugen, wobei die soft-kombinierten Bits Wahrscheinlichkeitswerte sind, die anzeigen, ob ein jeweiliges codiertes Bit eine Eins oder eine Null ist.

13. Computerprogramm, das dazu konfiguriert ist zu bewirken, dass ein Verfahren nach einem der Ansprüche 1-6 durchgeführt wird.

## Revendications

1. Procédé comprenant :
la réception (300) d'une version de redondance incluant une pluralité de bits de la version de redondance ;
la combinaison temporaire (305) des bits de la version de redondance avec des bits contenus dans une mémoire-tampon correspondants afin de produire des bits combinés temporaires correspondants ;
**caractérisé par** la comparaison (310) des bits combinés temporaires avec les bits contenus dans la mémoire-tampon correspondants afin d'identifier des bits modifiés et des bits non modifiés ; et
l'enregistrement (315) des bits modifiés dans une mémoire-tampon afin de remplacer par ceux-ci les bits contenus dans la mémoire-tampon qui correspondent aux bits modifiés.

2. Procédé selon la revendication 1, dans lequel la réception de la version de redondance inclut une réception de la version de redondance en réponse à une exécution d'une demande automatique de répétition hybride, HARQ.

3. Procédé selon la revendication 1, dans lequel la comparaison des bits combinés temporaires avec les bits contenus dans la mémoire-tampon correspondants afin d'identifier des bits modifiés et des bits non modifiés inclut le réglage d'une valeur des bits non modifiés à une valeur neutre et la suppression (320) des bits non modifiés ayant la valeur neutre.

4. Procédé selon la revendication 1, dans lequel la réception de la version de redondance inclut une réception de la version de redondance en réponse à une exécution d'une demande automatique de répétition hybride, HARQ, et dans lequel l'enregistrement des bits modifiés inclut un enregistrement des bits modifiés dans une mémoire-tampon HARQ externe.

5. Procédé selon la revendication 1, dans lequel la réception de la version de redondance inclut une réception de la version de redondance en réponse à une exécution d'une demande automatique de répétition hybride, HARQ, et dans lequel l'enregistrement des bits modifiés inclut un enregistrement des bits modifiés dans une mémoire-tampon HARQ interne.

6. Procédé selon la revendication 1, dans lequel la combinaison temporaire des bits de la version de redondance avec des bits contenus dans une mémoire-tampon correspondants afin de produire les bits combinés temporaires correspondants inclut une combinaison temporaire afin de produire les bits combinés temporaires correspondants, les bits combinés temporaires étant des valeurs de probabilité indiquant si un bit codé respectif est un « un » ou un « zéro ».

7. Appareil (200) comprenant :
au moins un processeur (205),
au moins une mémoire incluant un code de programme informatique,
l'au moins une mémoire et le code de programme informatique étant configurés pour commander l'appareil, en conjonction avec l'au moins un processeur, pour au moins :
recevoir (300) une version de redondance incluant une pluralité de bits de la version de redondance ;
combiner temporairement (305) les bits de la version de redondance avec des bits contenus dans une mémoire-tampon correspondants afin de produire des bits combinés temporaires correspondants ;
comparer (310) les bits combinés temporaires avec les bits contenus dans la mémoire-tampon correspondants afin d'identifier des bits modifiés et des bits non modifiés ; et
enregistrer (315) les bits modifiés dans une mémoire-tampon afin de remplacer par ceux-ci les bits contenus dans la mémoire-tampon qui correspondent aux bits modifiés.

8. Appareil selon la revendication 7, dans lequel l'appareil prévu pour recevoir la version de redondance inclut le fait d'être prévu pour recevoir la version de redondance en réponse à une exécution d'une demande automatique de répétition hybride, HARQ.

9. Appareil selon la revendication 7, dans lequel l'appareil prévu pour comparer les bits combinés temporaires avec les bits contenus dans la mémoire-tampon correspondants afin d'identifier des bits modifiés et des bits non modifiés inclut le fait d'être prévu pour régler une valeur des bits non modifiés à une valeur neutre et pour supprimer (320) les bits non modifiés ayant la valeur neutre.

10. Appareil selon la revendication 7, dans lequel l'appareil prévu pour recevoir la version de redondance inclut le fait d'être prévu pour recevoir la version de redondance en réponse à une exécution d'une demande automatique de répétition hybride, HARQ, et dans lequel l'appareil prévu pour enregistrer les bits modifiés inclut le fait d'être prévu pour enregistrer les bits modifiés dans une mémoire-tampon HARQ externe.

11. Appareil selon la revendication 7, dans lequel l'appareil prévu pour recevoir la version de redondance inclut le fait d'être prévu pour recevoir la version de redondance en réponse à une exécution d'une demande automatique de répétition hybride, HARQ, et dans lequel l'appareil prévu pour enregistrer les bits modifiés inclut le fait d'être prévu pour enregistrer les bits modifiés dans une mémoire-tampon HARQ interne.

12. Appareil selon la revendication 7, dans lequel l'appareil prévu pour combiner temporairement les bits de la version de redondance avec des bits contenus dans une mémoire-tampon correspondants afin de produire les bits combinés temporaires correspondants inclut le fait d'être prévu pour combiner temporairement afin de produire les bits combinés temporaires correspondants, les bits combinés temporaires étant des valeurs de probabilité indiquant si un bit codé respectif est un « un » ou un « zéro ».

13. Programme informatique configuré pour faire en sorte qu'un procédé selon l'une quelconque des revendications 1 à 6 soit exécuté.
